# EUROPEAN PATENT SPECIFICATION

(11) **EP 0 333 319 B1**
(45) Date of publication and mention of the grant of the patent: **21.05.1997**
(21) Application number: 89301379.7
(22) Date of filing: 14.02.1989
(51) Int. Cl.: G06F 9/22, G06F 9/26

(54) **Bus-combatible programmable sequencers**
Sammelleitungsverträgliche programmierbare Folgesteuerung
Séquenceurs programmables d'une manière compatible avec un bus

(30) Priority: 14.03.1988 US 167598
(43) Date of publication of application: 20.09.1989
(73) Proprietor: ADVANCED MICRO DEVICES, INC., Sunnyvale, CA 94088-3453 (US)
(72) Inventor: Freidin, Philip, Sunnyvale California 94087 (US); New, Bernard J., Los Gatos California 95032 (US)
(74) Representative: Sanders, Peter Colin Christopher

(56) References cited:
- 18TH ANNUAL WORKSHOP ON MICROPROGRAMMING, 3 December 1985, PACIFIC GROVE,US pages 35 - 46 F.J.BURKOWSKI 'An interactive diagnostic/debugging subsystem for bit-sliced processors'
- PATENT ABSTRACTS OF JAPAN vol. 011, no. 239 (P-602)6 August 1987 & JP-A-62 050 944

## Description

This invention relates generally to digital controllers known as sequencers or state machines, and more particularly, to single-chip programmable digital sequencers having an on-chip interface to an external microprocessor.

18th Annual Workshop On Microprogramming, 3 December 1985, Pacific Grove, US, pages 35 - 46; F.J. Burkowski: "An interactive diagnostic/debugging subsystem for bit-sliced processors" describes a diagnostic/debugging facility that can be embedded into a processor as a permanent sub-system that provides considerable help during prototype debugging, and serves later as a diagnostic aid during the on-going life of the product.

Known in the art are sequencers which operate autonomously with only condition codes to control program flow. One such sequencer is manufactured as an integrated circuit by Advanced Micro Devices Inc. and designated the Am29PL141. This integrated circuit has an on-chip read-only memory which can store a "control program". An advance over the Am29PL141 is described in the related co-pending application EP 0251715 entitled "Programmable, Expandable Controller with Flexible I/O". In one aspect of this invention, the advance includes the provision of an on-chip memory which is a random access memory (RAM) type. The RAM is used to store "microinstructions" which form a control program for the sequencer. In this sequencer, the control program can be dynamically altered which provides some external control over the sequencer.

Ideally, the sequencer should be accessible to an external microprocessor so that a wide variety of status conditions can be monitored by the microprocessor. Changes in the control program can then be dynamically made based on these status conditions internal to the sequencer as well as conditions external to the sequencer which are sensed by the microprocessor.

An interface, preferably integral to the integrated circuit housing the sequencer, should enable one of a number of commonly-used microprocessors to be connected to the intergrated circuit.

These objects are met by a sequencer according to claim 1. Advantageous embodiments are found in the subclaims.

### SUMMARY OF THE INVENTION

A single-chip sequencer is disclosed having a bidirectional bus compatible with a number of common microprocessors. The bus terminates on a set of pins of the chip housing the sequencer. Standard signals are applied to pins of the chip which permit reading and writing of information by the microprocessor to various elements of the sequencer. Among these elements are a writeable control store (WCS) which contains one or more control programs for the sequencer.

The status of various registers, a stack, a program counter, a pipeline register used for the WCS, and several user-registers, among others, can be accessed by the microprocessor.

The single-chip bus-compatible sequencer disclosed herein requires no external control store or other support circuitry. A microprocessor can be connected to the chip with little or no logic circuitry. The sequencer operates in either of two modes: one mode employs a read strobe and a write strobe for reading and writing by the microprocesser and is compatible then with microprocessors manufactured by the Intel Corporation. In a second mode the sequencer employs a data strobe and the direction of transfer on the bus is set by a read/write input signal. In this mode the sequencer is compatible with microprocessors manufactured by the Motorola Corporation. The sequencer provides a mechanism for detecting which type of microprocessor is connected to it and can automatically set the mode for compatibility with that particular microprocessor.

In the accompanying drawings, by way of example only:-

Fig. 1 illustrates an application of a bus-compatible sequencer of the present invention interconnected to a microprocessor.

Fig. 2 is a block diagram sequencer according to the instant invention.

Fig. 3 is a block diagram of the registers within the register file employed in the bus-compatible sequencer.

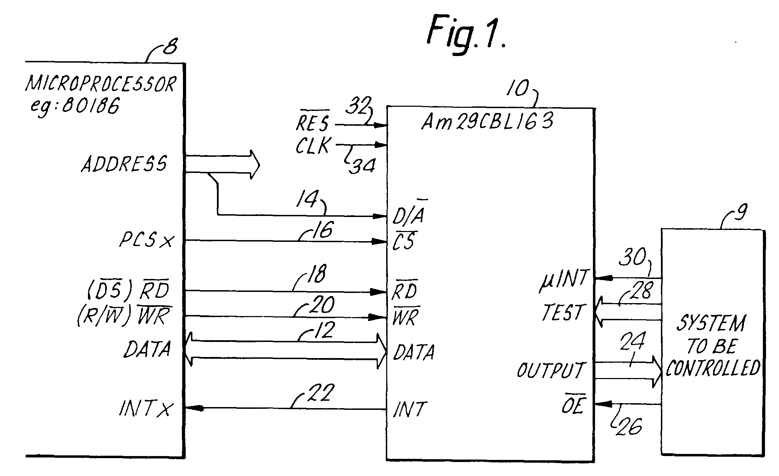

Fig. 1 illustrates a typical application of a sequencer 10 according to the instant invention, connected to a microprocessor 8 and an object to be controlled 9 by the sequencer 10.

The signals conducted on the lines shown in Fig. 1 have the following description.

D₇-D₀ form bidirectional data bus 12 and are active high three-state, bidirectional bus for transfer of data to and from a microprocessor.

D/^{∼}A [Data/^{∼}Address] 14 input for differentiating between Data and Address transfers. This signal line would normally be connected to the least significant address line of the host microprocessor bus in order to simplify control of communications.

^{∼}CS [Chip Select] 16 is an active low input which enables a transfer to begin between the sequencer 10 and the host microprocessor.

^{∼}RD [Read (Mode 0)] or ^{∼}DS [Data Strobe (Mode 1)] 18 is dependent on the mode to which the sequencer 10 has been set (after the first write cycle in the case of mode 1). In mode 0, the pin connected to line 18 behaves as a read strobe, and a read access is performed when it is received. In mode 1, the pin behaves as a data strobe and a read or write access is performed depending on the state of the R/^{∼} W line.

^{∼}WR [Write (Mode 0)] or R/^{∼}W [Read/Write (Mode 1)] 20 depends on the mode to which the sequencer 10 has been set (after the first write cycle in the case of mode one). In mode 0, the pin connected to line 20 behaves as a write strobe, and a write access is performed when it is received. In mode 1, the pin behaves as a read/write indicator.

INT [Interrupt] 22 is an active high output that provides an interrupt to the host microprocessor when one or more interrupt mask registers bits are unmasked and the relevent status bit(s) become active.

I/O₁₅-I/O₀ is a bidirectional Input/Output bus 24: as an Output is connected to an internal writable control store (WCS) via a pipeline register. These pins can be individually reconfigured as registered inputs by changing the contents of an Output Disable (O_DIS) register appropriately.

^{∼}OE [Output enable] 26 is an active low input to enable the relevent bits of the Output bus which are not masked by an Output Mask (O_MSK) register, or disabled by the O_DIS register.

T₇-T₀ [Test Inputs] 28 are a set of eight test inputs which are used to conditionally control the flow of the microprogram in the sequencer 10. The polarity of the test is programmable by a bit in the micro code. These inputs are registered.

µINT [Micro-interrupt] 30 is a low-to-high edge triggered input to indicate that a micro-interrupt routine should be executed. WCS bit 43 in the micro code, in conjunction with a Control 1 Register bit 0, enables or disables this interrupt. After an interrupt has been recognized, no further interrupts are recognized until after the first instruction of the current interrupt has been executed. If interrupts are enabled, there is a synchronization latency of at least 1 cycle, and at most 2 cycles, from the rising edge of µINT to the first cycle of the interrupt routine.

^{∼}RESET (^{∼}RES) 32 is an active low input that causes a reset of the sequencer 10.

CLK [Clock] 34 is an input that supplies a synchronizer clock for all elements of sequencer 10 except for a bus interface control block 36.

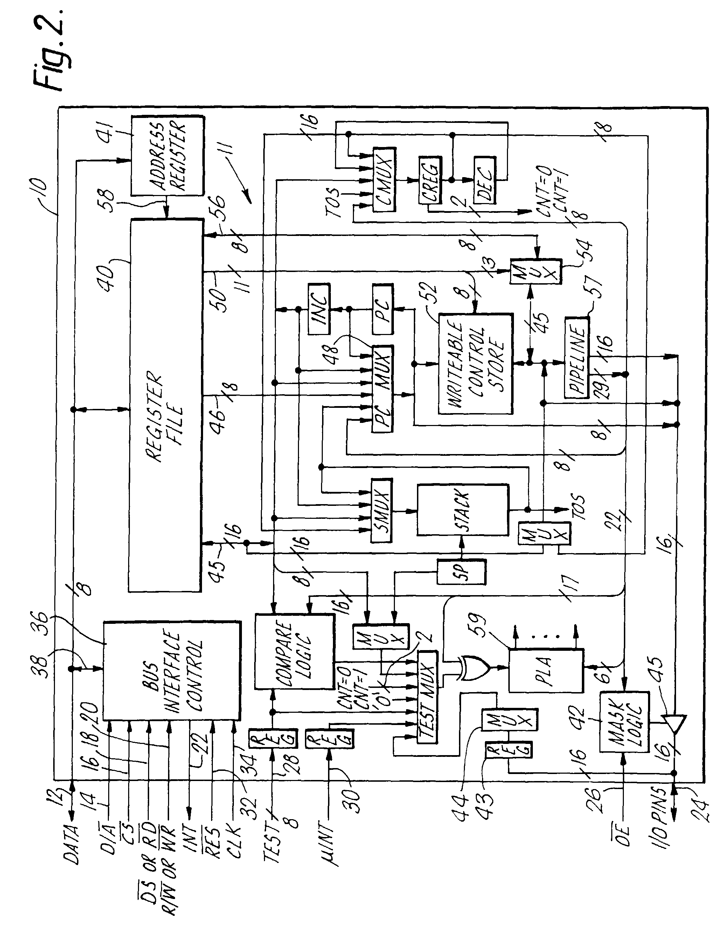

Fig. 2 is a block diagram of a sequencer 10 in accordance with the instant invention. The sequencer 10 depicted in Fig. 2 is preferably fabricated as a single monolithic integrated circuit (chip). Access to the elements within the boundary of the chip is via terminals (pins) of the chip. Signal lines crossing the boundary of the chip shown on the left side of Fig. 2 are among those lines connected to the pins. Signal lines shown in Fig. 2 have a number adjacent to a slash through the signal line. This number indicates the number of conductors comprising the signal line and allows that number of signals to be conducted in parallel.

A bus interface control 36 receives the D/$\overline{\text{A}}$, $\overline{\text{CS}}$, $\overline{\text{RD}}$ ($\overline{\text{DS}}$) and $\overline{\text{WR}}$ (R/$\overline{\text{W}}$) signals from the host microprocessor and generates the INT signal thereto, if an interrupt condition occurs and is unmasked. The bus interface control 36 is connected to data bus 12 via a set of control lines 38. The structure and operation of the bus interface control 36 is conventional in all respects except for the automatic configuration into mode 0 or 1 which allows bus 12 compatibility with Intel or Motorola microprocessors, respectively. This aspect of the invention is described in the related co-pending application EP-A-0 333 319, "Universal Microprocessor Interface".

In its other aspects the bus interface control 36 will not be described herein since it is conventional and known to those of ordinary skill in the art.

A register file 40 contains a variety of registers accessible to the host microprocessor via data bus 12. A description of register file 40 will be given hereinbelow in connection with Fig. 2. An address register 41 is used in conjunction with register file 40 and will likewise be described in connection with Fig. 2. Conceptually, the register file 40 is seen by the host microprocessor as a single set of addressable registers, organized as a file. However, the register file 40 is implemented to permit the sequencer 10 access to the contents of the various registers and to allow modification of the contents of more than one register therein during a single cycle of the sequencer.

The remaining elements shown in Fig. 2 and denoted generally by reference numeral 11, other than a Mask Logic 42, a register 43, a multiplexer (MUX) 44, and a tri-state buffer 45, are described in the related, co-pending application EP-A-0 251 715 "Programmable, Expandable Controller With Flexible I/O". Particular attention is drawn to the block diagram of Fig. 11 in that related application, which is similar in all important respects to that portion of Fig. 2 labelled by numeral II, other than as described above. Mask Logic 42 and tri-state buffers 45 permit terminal pins 24 to operate as either input or output terminals, as determined by the OE signal on line 26 and a microinstruction stored in WCS 52. This aspect of the sequencer 10 is described in the related, co-pending application EP-A-0 337 595 entitled "Flexible, Reconfigurable Terminal Pin".

Register file 40 includes four user registers (USERO, USER1, USER2 and USER3) which are accessible via a bus 45 by elements of sequencer 10. A bus 46 interconnects the register file 40 and inputs to a PC MUX 48. A bus 50 conducts a writeable control store (WCS) address from register file 40 to WCS 52 and to a bidirectional multiplexer (MUX) 54. The MUX 54 also is connected to register file 40 by a bidirectional bus 56 conducting WCS data to and from WCS 52.

The writable control store (WCS) 52 is preferably arranged as 256 words each of 45 bits. It is accessed by the microprocessor via the bus interface control block 36, which reads or writes six bytes for each word of the micro code. The output of the WCS 52 is pipelined (via pipeline register 57) and the word separated into seven fields depending on an instruction format.

Sixteen bits of the micro code word (0-15) are output on signal lines 24 from the sequencer via three-state buffers 45. The upper byte can be replaced by the output of the PC-MUX by setting bit 0 of a Control 2 register (Enable µPC), and the lower byte can be replaced with the lower 8 bits of the counter by setting bit 1 of the Control 2 register (or by executing a TXC instruction). In addition, all 16 output bits can be replaced by the contents of one of the User registers by executing a TXU instruction. Finally, any of these output pins can be individually reconfigured as an input pin by setting a O_DIS register appropriately.

Sixteen bits of the micro code word (31-16) form a data field which is used for various functions, such as branch addresses or user register addresses. The lower 8 bits of this field may be used for data while the upper 8 bits are used as a Mask value. Alternatively, the upper 8 bits are used as a Mask value, while the 2 LSBs are used as a User Register Select field and the other 6 bits are unused. In another situation, the 2 LSBs are used as the User Register Select field while the remaining 14 bits are unused.

Four bits of the micro code word (35-32) select one of the 16 possible test inputs on lines 28 or a 5 bit Register Select field (the fifth bit is the Polarity bit in an instruction that uses the Test field).

One bit of the micro code (36) selects the polarity of the test (true or false) for use with the Test field. Alternatively, it is combined with the 4 bits of the Test field to make up a Register Select field.

Six bits of the micro code word (42-37) make up the instruction and go to a PLA block (59) to be decoded into the signals which control the sequencer operation.

One bit of the micro code word (43) enables micro-interrupts when set, but it can be overridden by bit 0 of the Control 1 register. This allows the user to have, for example, a subroutine which normally enables interrupts but which, when called from certain places in the program, has its ability to enable interrupts blocked.

One bit of the micro code word (44) enables the relevent bits of the Output buffers which are not masked by the WCS_OE registers or diabled by the O_DIS register.

The address register 41 is accessed by the microprocessor when the D/^{∼}A signal is LOW; otherwise the microprocessor is connected to data registers within register file 40. The contents of address register 41 conducted to register file 40 on bus 58 determines which data register is to be accessed by the microprocessor, in accordance with Table I.

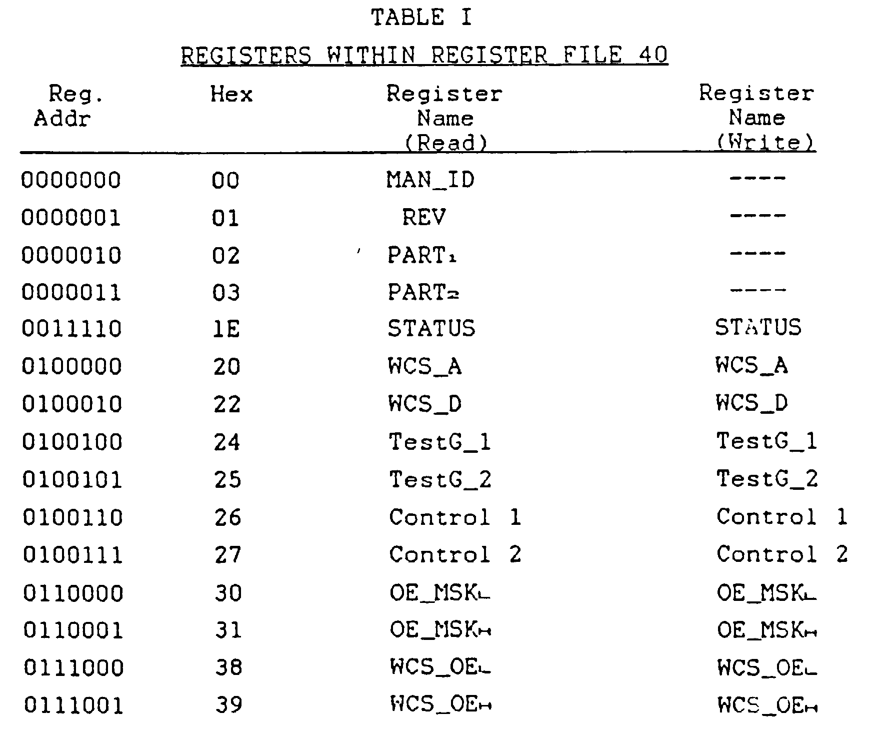

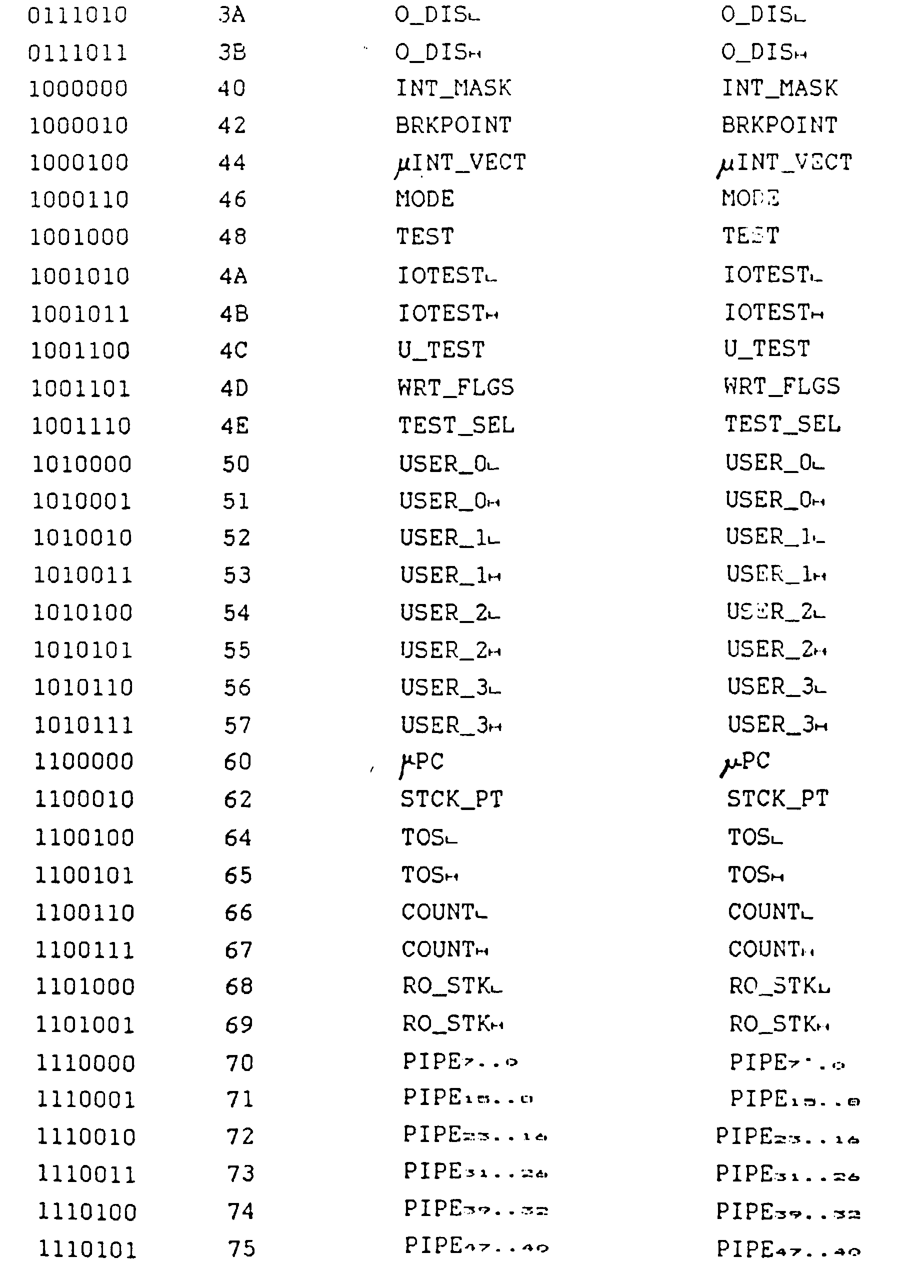

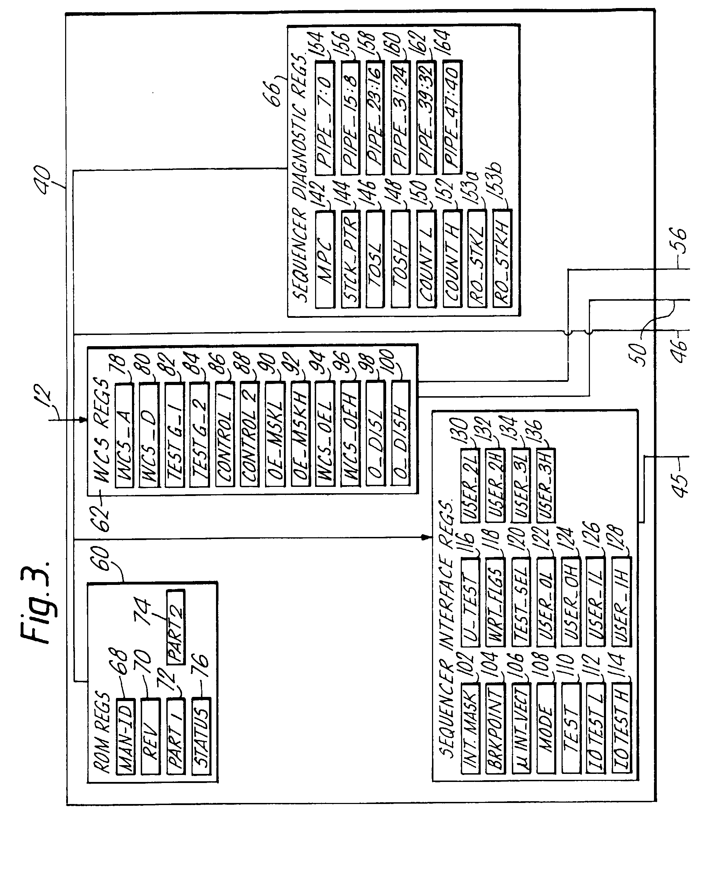

With reference now to Fig. 3, Register File 40 is shown in block diagram form. Register File 40 consists of four groups of registers: read-only registers (ROM REGS) 60, Writeable Control Store registers (WCS REGS) 62, Sequencer Interface Registers 64, and Sequencer Diagnostic Registers 66.

ROM Registers provide information about the sequencer to the host microprocessor.

MAN_ID 68 contains the manufacturer's identity code. REV 70 contains the revision number. PART 72, 74 contain the device part number.

The Status Register 76 serves as the source of interrupts to the host processor, enables the host to establish the cause of an interrupt or to poll the status of the sequencer 10. Each of the bits in this register can generate an interrupt to the host when they are set, if their corresponding mask bit in an Int_Mask register is cleared. While the Status Register is not strictly a ROM location, it is included in this group because it is not setable by the host processor. Instead, writing ones to the status register serves to clear the appropriate bits. For example, if 0000 0001 is written to the Status Register, then the I0 flag (or interrupt) is cleared and all the other bits are unchanged. The Status Register 76 contains seven bits which are defined as follows:

A HALT bit indicates that the sequencer has executed a halt instruction. It is not set when the sequencer is halted by the host microprocessor through the Halt bit in a mode register;

A BREAK bit indicates that the sequencer has reached a breakpoint;

An A_FULL bit indicates that the sequencer stack has 28 or more entries in it, and that some action may need to be taken to avoid a possible stack overflow;

A SEQ_LD bit indicates that the sequencer has caused one of the user registers to be loaded;

A SEQ_INT bit indicates that the INT instruction has been executed by the sequencer;

A µINT bit indicates that the micro-interrupt line has been asserted; and

An I0 bit indicates the selected test input has been asserted. The selection is made with bits 0 to 2 of a Test_Sel register, and the polarity is selected by bit 7 of the Test_Sel register.

The Writable Control Store Registers 62 group of registers are the means by which the host microprocessor can access the writable control store 52 and control its contents. All these registers can be read and written by the microprocessor.

A WCS Address (WCS_A) register 78 holds the address of a micro-word in the WCS 52. To read or write a full word of the WCS, the host microprocessor must read or write 6 bytes of data. When 6 bytes of data have been read or written, the WCS_A register is automatically incremented. This operation is achieved by means of a 3 bit counter (not shown) which is cleared by a write to the WCS address register 78 and which counts in modulo 6 fashion thereafter so as to multiplex the bytes into the proper position in the WCS word (the low order byte is the first byte read or written). To send a block of data, the host microprocessor sets up the base address by writing to the WCS address register 78 and then sends micro-code words in multiples of 6 bytes to a WCS data register 80.

The WCS_Data (WCS_D) register 80 is the means by which the host microprocessor writes or reads the WCS 52.

A Test Group 1 (TESTG_1) Register 82 and a Test Group 2 (TESTG_2) Register 84 contain bit patterns indicative of which of the TEST signals 28, or internal signals is selected by the TEST MUX, and is to be tested by a particular microinstruction.

A CONTROL1 register 86 holds the micro-interrupt enable bit (µIEN, bit 0). This bit operates in conjunction with bit 42 of the WCS as shown below.

| CONTROL REGISTER BITS | | |
|---|---|---|
| Control 1 µIEN (bit 0) | WCS µIEN (bit 42) | Result: Interrupts are: |
| 1 | 0 | Ignored |
| 1 | 1 | Accepted |
| 0 | x | Ignored |

Also included in the CONTROL1 register is an EQ bit, which allows the state of the EQ flag to be saved and restored in the event of an interrupt. This bit can be read to obtain the current state and can be set or cleared as desired in order to restore it.

A CONTROL2 register 88 contains a:
Bit 0 (EN_µPC) which when set, places the 8 bit value of the micro-code address on the upper byte of the input/output lines 24;
Bit 1 (EN_TXC) which when set, places the lower byte of the counter register (CREG) on the lower byte of the output lines;
Bit 2 (BRK Match Report bit) which when set, causes the interrupt pin to output the break match logic status so that when a breakpoint match occurs, it is driven high for the duration of the instruction. The sequencer continues to run without halting. This is useful when a trigger is desired on the occurrence of the breakpoint but the sequencer should not be halted, as might be the case for oscilloscope-loop type diagnostics. When this bit is on, all normal sources of interrupt are blocked, as if EN_INT in the Mode register was set to zero. The BRKEN bit in the Mode register is also ignored.

An OE_MSK register comprising an OE_MSK_{L} register 90 and an OE_MSK_{H} register 92 provides a mask which determines which bits of the Output bus 24 are affected by the ^{∼}OE input signal on line 26. Output bits are three-stated by the ^{∼}OE pin only if bits in the mask register 90, 92 are set to a '1'. Since the ^{∼}OE signal is a low-true input, the ^{∼}OE pin can only three-state the relevant bits of I/O bus 24 when it is a '1' as well.

A WCS_OE register comprising a WCS_OEL register 94 and a WCS_OEH register 96 performs a similar function to that of the OE_MSK register. The WCS_OE register masks bits of the Output bus 24 which are to be three-stated by the ^{∼}OE bit in the micro-word. Output bits are three-stated by the ^{∼}OE bit in the micro code only if bits in the WCS_OE register are set to a '1'. Since the ^{∼}OE bit is an active low micro-code bit, the ^{∼}OE bit can only three-state the relevant bits of the bus when it is a '1' as well.

An Output Disable (O_DIS) register comprising an O_DIS__{L} register 98 and an O_DIS__{H} register 100 is a mask register similar to the two previous mask registers in that it selects which pins will be enabled as outputs. The difference is that while WCS_OE and OE_MASK can allow pins to be selectively enabled, O_DIS forces pins to be always disabled, allowing them to be used as additional test inputs. This disabling function overrides the function of the WCS_OE, OE_MASK, EN_µPC, and EN_TXC. When a bit in this register is set, the corresponding output is disabled.

The operation of the OE_MSK registers 90, 92, the WCS_OE registers 94, 94, the O_DIS registers 98, 100, the OE signal line 26 and the OE flag in a microinstruction is summarized in Table II.

**TABLE II**

| O_DIS | ^{∼}OE (µcode) | WCS_OE ( Mask) | ^{∼}OE (Pin) | OE_MASK (Pin Mask) | INPUT/OUTPUT Bus 24 |
|---|---|---|---|---|---|
| 0 | 0 | 0 | 0 | 0 | Driven |
| 0 | 0 | 0 | 0 | 1 | Driven |
| 0 | 0 | 0 | 1 | 0 | Driven |
| 0 | 0 | 0 | 1 | 1 | Three-state |
| 0 | 0 | 1 | 0 | 0 | Driven |
| 0 | 0 | 1 | 0 | 1 | Driven |
| 0 | 0 | 1 | 1 | 0 | Driven |
| 0 | 0 | 1 | 1 | 1 | Three-state |
| 0 | 1 | 0 | 0 | 0 | Driven |
| 0 | 1 | 0 | 0 | 1 | Driven |
| 0 | 1 | 0 | 1 | 0 | Driven |
| 0 | 1 | 0 | 1 | 1 | Three-state |
| 0 | 1 | 1 | 0 | 0 | Three-state |
| 0 | 1 | 1 | 0 | 1 | Three-state |
| 0 | 1 | 1 | 1 | 0 | Three-state |
| 0 | 1 | 1 | 1 | 1 | Three-state |
| 1 | X | X | X | X | Three-state |

The Sequencer Interface Block of registers 64 is the means by which the host microprocessor may affect the sequence of micro code executed. These registers can all be read and written by the microprocessor.

An Interrupt mask (INT_MASK) register 102 is used to mask off unwanted interrupts to the host microprocessor. The bits positions correspond directly to bits in the Status register 76 described hereinabove. To enable an interrupt the relevent bit should be cleared. When the host microprocessor receives an interrupt it can read the Status Register 76 to determine from the bit pattern which of several possible interrupts actually occurred. Upon learning which interrupt occurred, the host microprocessor can then write a 1 to the corresponding bit in the Status register to reset it while leaving all the other interrupt bits unaffected. An enabled interrupt will continue to be asserted to the host processor until the host does one of three things:
1. Set bits in the Int_Mask register for all pending interrupts (bits that are set in the Status register); or
2. Clear all unmasked pending interrupts by writing ones to the Status register; or
3. Clear the En_Int bit in a Mode register. This register is read/write.

A BRKPOINT register 104 allows the sequencer to stop (or generate an interrupt) at a particular point in the micro code. A breakpoint can be set by writing an address into the breakpoint register. When the breakpoint is reached, bit 6 of the Status register 76 is set and the appropriate action taken (halt or interrupt). This register is read/write.

The micro-interrupt vector (µINT_VECT) register 106 specifies the address for micro-interrupts (interrupts to the sequencer). When micro-interrupts are enabled and an interrupt occurs, this register supplies the starting address of the micro-interrupt service routine. The interrupt return address is pushed onto the stack while the first instruction of interrupt service routine is being executed. This register is read/write.

A mode register 108 controls the global operation of the sequencer; such as start, halt, stop at breakpoint and reset. This register is read/write. It contains a START bit, which when set, allows the sequencer to execute micro code. This bit must be set after a reset condition, or after the sequencer is halted or a breakpoint has occurred, in order to start or restart the sequencer. However, if a Halt bit in the Mode register has been set but not yet cleared, then setting the start bit will cause the sequencer to perform a single step operation. The Halt bit in the Status register has no effect on the restarting of the sequencer.

A µHALT bit, when set, halts the sequencer after the current cycle. The contents of all registers will be maintained. The microprocessor may change values in the sequencer (e.g., for debugging) and restart the sequencer. The microprocessor may also use this bit to halt the sequencer in the event of a micro code failure. This bit allows a single-step mode since a Start will cause the sequencer to halt again after only one instruction has been executed.

A BRKEN bit, when set, enables the breakpoint facility. The host microprocessor writes an 8-bit address into the breakpoint register 104 and when the µPC address equals the breakpoint register value, the sequencer will stop on the next cycle, unless the BRK_Match_Report bit (Control register 2 bit 2) is set in which came an interrupt will be generated instead.

A EN_INT bit, when set, allows the sequencer to interrupt the host microprocessor when one or more of the interrupt conditions occur. It is ignored if the BRK_Match_Report bit 2 of the Control register 2 is set.

A SINGLE_STEP_DONE bit is set by any successfully run sequencer cycle, and will therefore be always on during normal execution.

A RESET bit, when set, will initiate a software reset of the sequencer. When read back, a 1 indicates that the device is in the process of performing a reset. This bit automatically returns to 0 when the reset operation is complete.

A Test register 110, when read, indicates the value of the registered Test inputs on line 28.

An IOTEST comprising an IOTEST_{L} register 112 and an IOTEST_{H} register 114 forms a 16 bit register which holds the synchronized value of the I/O pins on bus 24. If any of these I/O pins have been selected as inputs by the O_DIS register 98, 100 then the contents of the IOTEST register can be used as test inputs, as selected by the Test Group 2 register 84.

U_TEST register 116 contains four bits which are set by the microprocessor and accordingly user defined.

A WRT_FLGS register 118 allows access to four semaphore flags. These flags are set whenever a write to the corresponding User register (high byte only) has taken place from either the sequencer or the host microprocessor. The are cleared whenever either the sequencer or the microprocessor reads the high byte of the register.

A Test Select (TEST_SEL) register 120 is used to select one of the 8 registered Test input pins to serve as the Iₒ input to the Status register 76 and so be capable of causing an interrupt to the host microprocessor. An Iₒ Pol bit is used to select the polarity of the test inputs for use as an interrupt. If Iₒ Pol is 0 then a low to high transition on the selected registered test input can cause an interrupt. If Iₒ Pol is 1, then a high to low transition is required to cause an interrupt. For either case, Iₒ interrupts only occur if the Iₒ mask bit in the Int_Mask register is clear.

USER [0:3] are four 16-bit user defineable registers comprising a low-order register 122, 126, 130, 134 and a high-order register 124, 128, 132 and 136, respectively, which can be read and written by both the host microprocessor and the sequencer. The sequencer can use the contents of these registers as branch addresses and data values. When the high byte of one of these registers is written, the corresponding W flag (Write Flag) in register 118 is also set. This allows either the host microprocessor or the sequencer to sense that the other has written something into a User register, which it can now read as necessary, so that these flags serve as a semaphore communication system between the processors. A flag is cleared by either the microprocessor or the sequencer reading the high byte of the appropriate register.

Sequencer Diagnostic Registers 66 enable the host microprocessor to read or write the sequencer registers. This is especially useful for testing and debugging micro code.

A µPC Register 142 contains the value of the Program Counter of the sequencer.

A STCK_PTR Register 144 contains the value of the stack pointer. After a stack pointer reset, the value in STCK_PTR register 144 is set to zero; a pre-increment is performed on a Push operation prior to writing the top of the stack and a post-decrement is performed after the top of the stack is read.

A TOS register comprising a low-order register 146 and a high-order register 148 contains the 16-bit value currently in the top of stack register of the sequencer.

A COUNT register comprising a low-order register 150 and a high-order register 152 contains the 16-bit value currently in the counter of the sequencer.

A RO_STK register comprising a low-order register 153a and a high-order register 153b contains the 16-bit value currently in the stack of the sequencer.

A PIPE register comprising six registers 154, 156, 158, 160, 162 and 164 contains the 45-bit value currently in the WCS pipeline register 57 (6 bytes, written or read one byte at a time, starting with the low order byte). The ability to read or write this register allows the user the ability, for example, to force a particular instruction to be executed by halting the sequencer, writing a new value into the pipeline register 57, and then restarting the sequencer.

There are two types of interrupts that involve the sequencer 10:
1. The sequencer can generate an interrupt to the host from one of seven sources as indicated by the contents of the status register 76. These sources are all maskable by the INT_MSK register 102 so that interrupts to the host can be completely disabled. The sources that can cause an interrupt are also reflected in the status register, so the host microprocessor can poll for a particular event. This interrupt does not affect the sequencer's operation.
2. The sequencer can receive a micro-interrupt which will cause an interrupt routine to be executed by the sequencer. The next address is saved on the stack and the contents of the µINT_VECT register 106 are used for the starting address of the interrupt routine. If micro-interrupts are enabled during the interrupt routine, the micro-interrupt could be allowed to interrupt again (i.e., nested interrupts). The micro-interrupt routine must disable interrupts until it has saved its state information. Initially this disable can be performed by the IEN micro-code control bit. After the first cycle of the interrupt routine, the IEN control bit in the Control 1 register can be used to inhibit micro-interrupts.

## Claims

1. A host-accessible programmable sequencer (10) comprising:
a bidirectional bus (12, 36, 38,41) for carrying host compatible address, data, and control signals to and from a host processor (8).
sequencing means (11) comprising a plurality of internal elements, the sequencing means for receiving control signals and supplying an address in accordance with the control signals; and
a register (40) comprising a plurality of registers (64, 66, 76) each of which is connected to the bidirectional bus (12) and to a respective one of the plurality of internal elements, other than the internal element supplying the address and other than the internal elements to which the control signals are supplied, to enable the host processor to access the contents of the plurality of internal elements.

2. The sequencer of claim 1 further comprising:
system interface means (24, 26, 28, 30) for providing interconnection between the programmable sequencer (10) and a system (9); and
a PLA block (59) for receiving a portion of one of a plurality of microcode words and for receiving system status signals (TEST,µINT, I/O) from the system (9) over the system interface means (24, 28, 30) and for generating therefrom one or more of the control signals.

3. The sequencer of claim 1 wherein the sequencer (10) is fabricated on a single monolithic integrated circuit.

4. The sequencer of claim 1 wherein the plurality of registers comprise:
a plurality of sequencer diagnostic registers (66) wherein a given sequencer diagnostic register in the plurality of sequencer diagnostic registers (66) is connected to a given internal element in the plurality of internal elements, wherein the given sequencer diagnostic register receives a state of the given internal element, and wherein the given sequencer diagnostic register is readable by the host processor (8).

5. The sequencer of claim 4 wherein the given internal element carries a program count state.

6. The sequencer of claim 4 wherein the given internal element carries a stack pointer state.

7. The sequencer of claim 1 wherein the plurality of registers comprise:
a status register (76) for storing a plurality of status bits, wherein each status bit in the plurality of status bits is set to a logical level indicating a status set by an internal element in the plurality of internal elements, wherein the plurality of status bits are readable from the status register (76) by the host processor (8), and wherein a status bit in the plurality of status bits includes one of a group consisting of:
a HALT bit indicating the sequencing means (11) has stopped sequencing in response to the sequencing means (11) processing a halt instruction;
a BREAK bit indicating the sequencing means (11) has stopped sequencing in response to having reached a breakpoint; or
a SEQ_INT bit indicating the sequencing means (11) has processed an interrupt.

8. The sequencer of claim 1, wherein the plurality of registers comprise:
a plurality of user interface registers (122-136) for storing information received from either the host processor (8) or the sequencing means (11); and
a write flag register (118) for storing a plurality of flag bits, wherein a given flag bit in the plurality of flag bits is associated with a given user interface register in the plurality of user interface registers (122-136), and wherein the given flag bit is set to a logical level indicating whether the given user interface register was recently written to by either the host processor (8) or the sequencing means (11).

9. The sequencer of Claim 1 further comprising:
a writable control store (52) having an input connected to the sequencing means (11) for storing microcode words, wherein at least one of the microcode words comprises data provided from the host, wherein the writable control store (52) supplies a particular one of the microcode words upon receipt of the address from the sequencing means, and
wherein the register (40) further comprises a second plurality of registers (62) which are connected to the bidirectional bus (12) and to the writable control store (52) to enable the host processor to write to the writable control store (52).

10. The sequencer of claim 9 further comprising:
a pipeline register (57) connected to the writable control store for receiving the particular microcode word selected from the writable control store (52) and supplying a portion of the particular microcode word to a system (9).

11. The sequencer of claim 9 wherein the sequencer (10) is fabricated on a single monolithic integrated circuit.

## Patentansprüche

1. Programmierbarer Host-Zugriffssequenzierer (10) mit:
- einem bidirektionalen Bus (12, 36, 38, 41) zum Leiten von mit einem Host kompatiblen Adressen-, Daten- und Steuersignalen zu und von einem Host-Prozessor (8),
- einer Sequenziereinrichtung (11) mit mehreren internen Elementen, wobei die Sequenziereinrichtung Steuersignale empfängt und eine Adresse entsprechend den Steuersignalen liefert, und
- einem Register (40) mit mehreren Registern (64, 66, 76), von denen jedes mit dem bidirektionalen Bus (12) und mit einem jeweiligen der mehreren internen Elemente verbunden ist, das von dem internen Element, welches die Adresse liefert, und von den internen Elementen, denen die Steuersignale zugeführt werden, verschieden ist, um dem Host-Prozessor einen Zugriff auf den Inhalt der mehreren internen Elemente zu ermöglichen.

2. Sequenzierer nach Anspruch 1, ferner mit:
- einer Systeminterfaceeinrichtung (24, 26, 28, 30) zum Herstellen einer Verbindung zwischen dem programmierbaren Sequenzierer (10) und einem System (9); und
- einem PLA-Block (59) zum Empfangen eines Teils eines von mehreren Mikrokodewörtern und zum Empfangen von Systemstatussignalen (TEST, µINT, I/O) von dem System (9) über die Systeminterfaceeinrichtung (24, 28, 30) und zum Erzeugen eines oder mehrerer der Steuersignale aus diesen.

3. Sequenzierer nach Anspruch 1, wobei der Sequenzierer (10) in einer einzelnen monolithischen integrierten Schaltung ausgebildet ist.

4. Sequenzierer nach Anspruch 1, bei dem die mehreren Register aufweisen:
- mehrere Sequenziererdiagnoseregister (66), wobei ein bestimmtes Sequenziererdiagnoseregister der mehreren Sequenziererdiagnoseregister (66) mit einem bestimmten internen Element der mehreren internen Elemente verbunden ist, wobei das bestimmte Sequenziererdiagnoseregister einen Zustand des bestimmten internen Elements empfängt, und wobei das bestimmte Sequenziererdiagnoseregister durch den Host-Prozessor (8) lesbar ist.

5. Sequenzierer nach Anspruch 4, bei dem das bestimmte interne Element einen Programmzählzustand enthält.

6. Sequenzierer nach Anspruch 4, bei dem das bestimmte interne Element einen Stackzeigerzustand enthält.

7. Sequenzierer nach Anspruch 1, bei dem die mehreren Register aufweisen:
- ein Statusregister (76) zum Speichern mehrerer Statusbits, wobei jedes Statusbit der mehreren Statusbits auf einen Logikpegel eingestellt ist, der einen von einem der internen Elemente der mehreren internen Elemente eingestellten Status angibt, wobei die mehreren Statusbits von dem Host-Prozessor (8) aus dem Statusregister (76) gelesen werden können, und wobei ein Statusbit der mehreren Statusbits eines aus einer Gruppe aufweist, die besteht aus:
- einem HALT-Bit, das angibt, daß die Sequenziereinrichtung (11) das Sequenzieren in Reaktion auf das Verarbeiten eines Haltebefehls durch die Sequenziereinrichtung (11) angehalten hat;
- einem BREAK-Bit, das angibt, daß die Sequenziereinrichtung (11) das Sequenzieren in Reaktion auf das Erreichen eines Unterbrechungspunkts gestoppt hat; oder
- einem SEQ-INT-Bit, das angibt, daß die Sequenziereinrichtung (11) einen Interrupt verarbeitet hat.

8. Sequenzierer nach Anspruch 1, bei dem die mehreren Register aufweisen:
- mehrere Benutzer-Interfaceregister (122-136) zum Speichern von Informationen, die entweder von dem Host-Prozessor (8) oder der Sequenziereinrichtung (11) her empfangen wurden; und
- ein Schreibflaggenregister (118) zum Speichern mehrerer Flaggenbits, wobei ein bestimmtes Flaggenbit der mehreren Flaggenbits einem bestimmten Benutzer-Interfaceregister der mehreren Benutzer-Interfaceregister (122-136) zugeordnet ist, und wobei das bestimmte Flaggenbit auf einen Logikpegel gesetzt ist, der angibt, ob in das bestimmte Benutzer-Interfaceregister kürzlich durch entweder den Host-Prozessor (8) oder die Sequenziereinrichtung (11) geschrieben wurde.

9. Sequenzierer nach Anspruch 1, ferner mit:
- einem beschreibbaren Steuerspeicher (52) mit einem mit der Sequenziereinrichtung (11) verbundenen Eingang zum Speichern von Mikrokodewörtern, wobei der beschreibbare Steuerspeicher (52) ein bestimmtes der Mikrokodewörter bei Empfang der Adresse von der Sequenziereinrichtung liefert, und
- wobei das Register (40) ferner eine zweite Vielzahl von Registern (62) aufweist, die mit dem bidirektionalen Bus (12) und dem beschreibbaren Steuerspeicher (52) verbunden sind, um ein Schreiben in den beschreibbaren Steuerspeicher (52) durch den Host-Prozessor (8) zu ermöglichen.

10. Sequenzierer nach Anspruch 9, ferner mit:
- einem mit dem beschreibbaren Steuerspeicher (52) verbundenen Pipeline-Register (57) zum Empfangen des bestimmten Mikrokodeworts, das aus dem beschreibbaren Steuerspeicher (52) ausgewählt wurde, und zum Liefern eines Teils des bestimmten Mikrokodeworts an ein System (9).

11. Sequenzierer nach Anspruch 9, bei dem der Sequenzierer (10) in einer einzelnen monolithischen integrierten Schaltung ausgebildet ist.

## Revendications

1. Séquenceur programmable (10) accessible à un système central comprenant :
un bus bidirectionnel (12, 36, 38, 41) pour acheminer des signaux de commande, des données, des adresses compatibles avec le système central, de et vers un opérateur du système central (8),
des moyens de mise en séquence (11) comprenant une pluralité d'éléments internes, les moyens de mise en séquence pour recevoir des signaux de commande et délivrer une adresse en fonction des signaux de commande, et,
un registre (40) comprenant une pluralité de registres (64, 66, 76), chacun d'eux étant connecté au bus bidirectionnel (12) et un élément respectif de la pluralité d'éléments internes autre que l'élément interne délivrant l'adresse et autre que les éléments internes auxquels les signaux de commande sont délivrés, afin de permettre à l'opérateur du système central d'accéder aux contenus de la pluralité d'éléments internes.

2. Séquenceur selon la revendication 1 comprenant en outre des moyens d'interface de système (24, 26, 28, 30) pour assurer l'interconnexion entre le séquenceur programmable (10) et un système (9) et
un bloc PLA (59) pour recevoir une portion de l'un des mots d'une pluralité de mots microcode et pour recevoir des signaux de l'état du système (TEST, µINT, 1/0) depuis le système (24, 28, 30) et pour générer à partir de ceux-ci un ou plusieurs des signaux de commande.

3. Séquenceur selon la revendication 1 dans lequel le séquenceur (10) est réalisé sur un circuit intégré monolithique unique.

4. Séquence selon la revendication 1 dans lequel la pluralité de registres comprend :
une pluralité de registres (66) de diagnostic de séquenceur, où un registre de diagnostic de séquenceur donné dans la pluralité de registres de diagnostic de séquenceur (66) est connecté à un élément interne donné de la pluralité d'éléments internes, dans lequel le registre de diagnostic de séquenceur donné reçoit un état de l'élément interne donné, et dans lequel le registre de diagnostic de séquenceur donné peut être lu par l'opérateur du système central.

5. Séquenceur selon la revendication 4 dans lequel l'élément interne donné achemine un état de comptage du système.

6. Séquenceur selon la revendication 4 dans lequel l'élément interne donné achemine un état indicateur de pile.

7. Séquenceur selon la revendication 1 dans lequel la pluralité de registres comprend :
un registre d'état (76) pour stocker une pluralité de bits d'état où chaque bit d'état de la pluralité de bits d'état est déterminé à un niveau logique indiquant un état déterminé par un élément interne de la pluralité d'éléments internes, où la pluralité de bits d'état peuvent être lus à partir du registre d'état (76) par l'opérateur du système central (8) et où un bit d'état de la pluralité de bits d'état comprend un groupe constitué de :
- un bit HALT indiquant que les moyens de mise en séquence (11) ont arrêté la mise en séquence en réponse aux moyens de mise en séquence (11) traitant une instruction d'arrêt,
- un bit BREAK indiquant que les moyens de mise en séquence (11) ont arrêté la mise en séquence en réponse au fait qu'un point d'arrêt a été atteint, ou,
- un bit SEQ INT indiquant que les moyens de mise en séquence (Il) ont traité une interruption de programme.

8. Séquenceur selon la revendication 1 dans lequel la pluralité de registres comprend :
- une pluralité de registres d'interface d'utilisateurs (122, 136) pour stocker de l'information reçue soit de l'opérateur du système central (8) soit des moyens de mise en séquence (11) et,
- un registre d'indicateurs d'écriture (118) pour stocker une pluralité de bits indicateurs, où un bit indicateur donné de la pluralité de bits indicateurs est associé à un registre d'interface d'utilisateurs donné de la pluralité d'interfaces d'utilisateurs (122-136) et dans lequel le bit indicateur donné est sélectionné à un niveau logique indiquant si le registre d'interface d'utilisateurs donné a été récemment écrit soit dans l'opérateur du système central (8) soit dans les moyens de mise en séquence (11).

9. Séquenceur selon la revendication 1 comprenant en outre une mémoire microprogrammable (52) ayant une entrée connectée aux moyens de mise en séquence (11) pour stocker des mots de micro-programmation, où au moins l'un des mots de microprogrammation comprend des données délivrées par l'ordinateur central, où la mémoire microprogrammable (52) délivre un mot de microprogrammation particulier faisant partie desdits mots de microprogrammation lors de la réception de l'adresse provenant des moyens de mise en séquence et dans lequel le registre (40) comprend en outre une seconde pluralité de registres (62) qui sont connectés au bus bidirectionnel (12) et à la mémoire microprogrammable (52) pour permettre à l'opérateur du système central d'inscrire dans la mémoire micro programmable (52).

10. Séquenceur selon la revendication 9 comprenant en outre un registre pipeline (57) connecté à la mémoire microprogrammable pour recevoir le mot particulier de microprogrammation choisi à partir de la mémoire microprogrammable (52) et pour délivrer une portion du mot de microprogrammation particulier à un système (9).

11. Séquenceur selon la revendication 9 dans lequel le séquenceur (10) est constitué d'un circuit intégré monolithique unique.
